# EUROPÄISCHE PATENTSCHRIFT

(11) **EP 1 415 737 B1**
(45) Veröffentlichungstag und Bekanntmachung des Hinweises auf die Patenterteilung: **20.07.2005**
(21) Anmeldenummer: 03090371.0
(22) Anmeldetag: 29.10.2003
(51) Int. Cl.: B21D 53/26, B60B 23/00

(54) **Verfahren zur Herstellung eines Fahrzeugrades**
Method for manufacturing a vehicle wheel
Procédé de fabrication d'une roue de véhicule automobile

(30) Priorität: 04.11.2002 DE 10252130
(43) Veröffentlichungstag der Anmeldung: 06.05.2004
(73) Patentinhaber: Michelin Kronprinz Werke GmbH, 42697 Solingen (DE)
(72) Erfinder: Däfler, Hans-Joachim, 40699 Erkrath (DE); Hibben, Michael Dipl.-Ing., 42929 Wermelskirchen (DE)
(74) Vertreter: Meissner, Peter E., Dipl.-Ing.

(56) Entgegenhaltungen:
- DE-A- 3 243 473
- DE-A- 10 042 989
- DE-B- 1 064 463

## Beschreibung

Die Erfindung betrifft ein Verfahren zur Herstellung eines Fahrzeugrad, bestehend aus einer Felge und einer mit dieser im Überlappungsbereich verbundenen Schüssel, gemäß dem Oberbegriff des Anspruchs 1 (siehe zum Beispiel DE-B-1 064 463).

Fahrzeugräder, bei denen Felge und Schüssel, die jeweils aus Blechwerkstoff bestehen, im Überlappstoß miteinander verbunden sind, sind bekannt.
Die Verbindung erfolgt in der Praxis vorzugsweise durch einen Presssitz und eine Schweißverbindung, wobei dies eine Schweißnaht oder auch eine Punktschweißverbindung sein kann.

Prozessbedingt führt die Schweißnaht und im kleineren Bereich auch jeder Schweißpunkt zu einer Schwächung des Materials, und zwar besonders bei höherfesten Werkstoffen, bei denen die Energiezufuhr beim Schweißen zu einer Verringerung der mechanischen Eigenschaften des Materials führt. Diese Tatsache muss bei der Dimensionierung des Fahrzeugrades, insbesondere der Felge, berücksichtigt werden.
Ein weiterer Nachteil, der bei einer Schweißverbindung auftritt, ist der Verzug der einzelnen Teile durch die Wärmeeinbringung. Dieser Verzug macht sich besonders bei dünnen Blechstärken bemerkbar und kann zu Beeinträchtigungen der Rund- und Planlaufwerte führen.

Einer Reduzierung der Felgendicke und somit eine Reduzierung des Gewichtes im Sinne eines Leichtbaues sind durch die Wärmeeinbringung während des Schweißprozesses Grenzen gesetzt.

Eine Verringerung des Wärmeeinbringens lässt sich beispielsweise durch MIG-Löten erreichen, da hierbei weniger Wärme notwendig ist als beim MIG-Schweißen. Durch die geringere Wärmeinbringung werden auch die vorher geschilderten Nachteile verringert, d.h. beispielsweise die Beeinträchtigung der Rund- und Planlaufwerte.

Das MIG-Löten, zur Erzielung einer stoffschlüssigen Verbindung zwischen Felge und Schüssel, ist aus der DE 100 42 989 C2 bekannt.

Weder durch die üblichen Schmelzschweißverfahren noch durch das MIG-Löten ist es aber möglich, Stahl- und Aluminiumeinzelteil zu einem Fahrzeugrad zu verbinden. Alternativ könnte zwar das Reibschweißen angewandt werden, jedoch scheidet dies aus wirtschaftlichen Gründen in der Praxis aus.

Nicht bewährt hat sich in der Praxis ein anderes Verfahren zur Verbindung von Felge und Schüssel, nämlich das Nieten. Hierbei musste zunächst sowohl in die Felge wie auch in die Schüssel Löcher gebohrt werden, in die die Nieten dann eingesetzt wurden. Nicht nur das Bohren der Löcher war ein zusätzlicher Arbeitsgang, sondern die Löcher bzw. der Bereich um die Nieten musste auch abgedichtet werden.

Der Erfindung liegt daher die Aufgabe zugrunde, ein Verfahren zur Herstellung eines Fahrzeugrades zu schaffen, mit dem sich wirtschaftlich Fahrzeugrräder herstellen lassen, die - verglichen mit dem Stand der Technik - bei gleichem Gewicht höher belastbar sind, bzw. bei gleicher Belastbarkeit ein geringeres Gewicht aufweisen.

Gelöst wird diese Aufgabe erfindungsgemäß durch ein Verfahren mit den Merkmalen des Anspruchs 1.

Nach der Erfindung tritt einerseits, keine Durchtrennung beider Fügepartner auf, damit die Dichtheit im Verbindungsbereich gewährleistet ist, und andererseits muss die Verbindung kraft- und formschlüssig sein. Letzteres wird dadurch erreicht, dass beim lokalen Verformen Hinterschneidungen, also eine Art Kragenbildung auftreten.

Beim Stanznieten ersetzt der Nietschneidvorgang das beim reinen Nieten notwendige Bohren eines Loches vor dem Nieten. Beim Fügevorgang stanzt der Niet (Halbhohlniet) das - in Fügerichtung gesehen - vordere oder obere Blechteil zunächst durch und formt sich dann im und mit dem hinteren oder unteren Fügepartner zu einer Hinterschneidung, also einem Schließkopf oder Kragen um. Das aus dem vorderen Fügepartner ausgestanzte Material füllt den hohlen Nietschaft aus und wird dort unverlierbar eingeschlossen.

An Stelle des Hohlnietes kann auch ein Vollniet verwendet werden, wenn durch seine Formgebung oder Verformung gewährleistet ist, dass sich die beschriebene Hinterschneidung ausbildet.

Die mit der Erfindung erreichbaren Vorteile lassen sich daher wie folgt zusammenfassen:
- da das Fügen ohne Wärmeeinbringung erfolgt, ergeben sich keine negativen Einflüsse auf die Materialeigenschaften der Fügepartner bzw. Beeinträchtigungen der Rund- oder Planlaufwerte.
- es lassen sich problemlos unterschiedliche Werkstoffe für die Herstellung der Fahrzeugräder verwenden, insbesondere Stahl- und Aluminiumblech, unterschiedlich beschichtete Bleche aus gleichem oder unterschiedlichem Werkstoff,
- der Fügeprozess zum Verbinden von Felge und Schüssel kann in andere Fertigungsverfahren, beispielsweise das Einziehen von Schüssel und Felge integriert werden,
- und schließlich ergeben sich erhebliche wirtschaftliche Vorteile dadurch, dass Energie
- und Schweißkosten, Kosten für Zusatzstoffe und Verschleißteile eingespart werden können.

In den Zeichnungen ist das erfindungsgemäße Verfahren sowie seine Anwendung auf das Fügen von Felge und Schüssel, dargestellt.

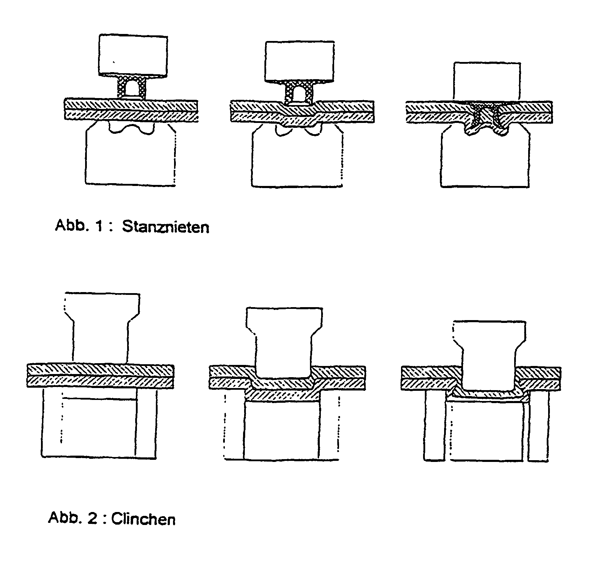

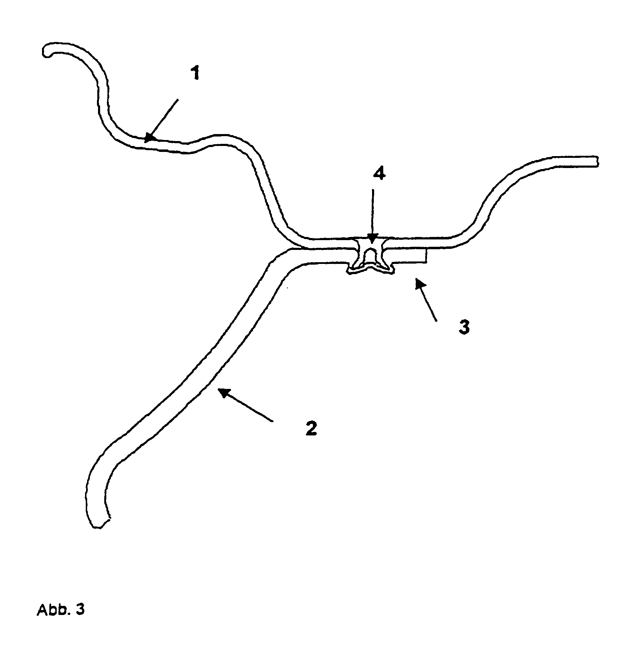

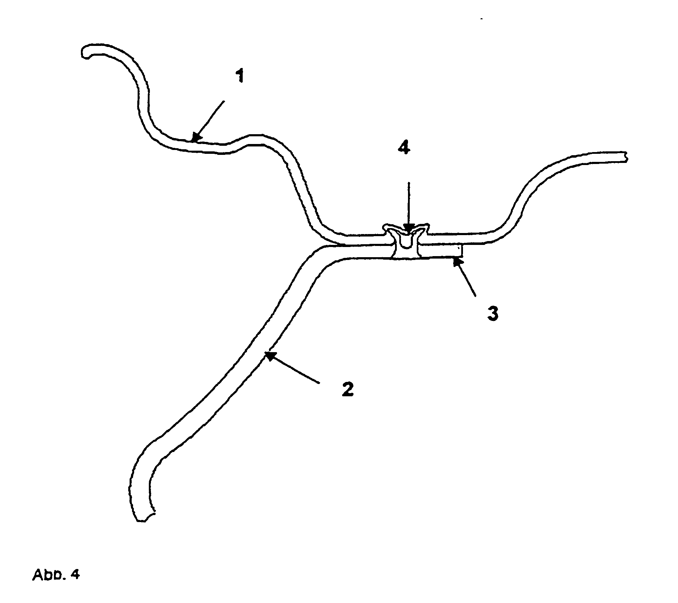

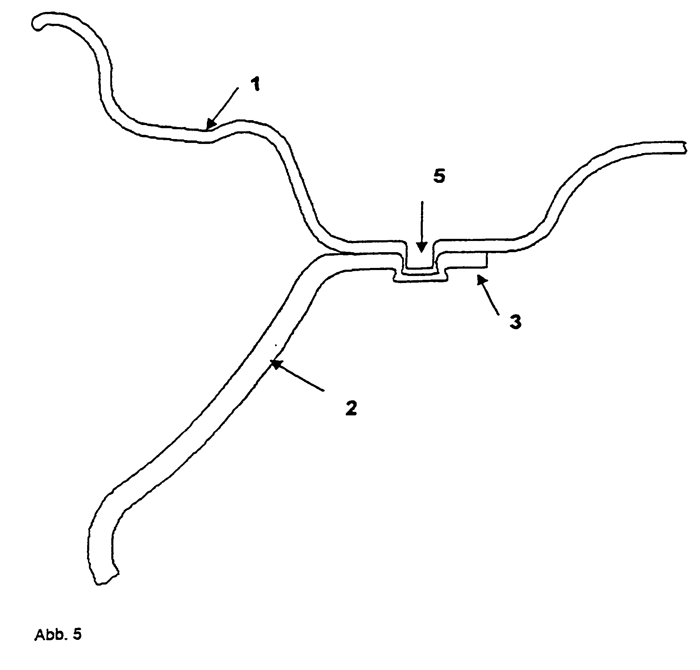

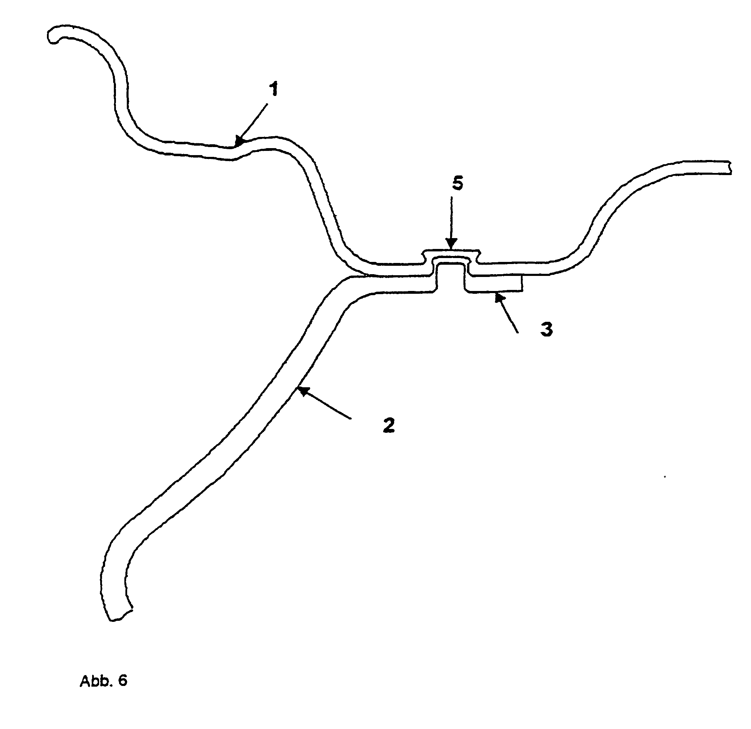

Abbildung 1 zeigt das Stanznieten. Hierbei werden ein Stempel 5 und eine entsprechend der zu erzeugenden Stauchform ausgebildete Matrize 6 verwendet. Der hohle Stanzniet ist mit 7 bezeichnet. Wie in der mittleren Abbildung ersichtlich, wird der Niet in den vorderen oder oberen Fügepartner (Blech) 7 eingedrückt, durchtrennt diesen und wird dann zusammen mit dem hinteren oder unteren Fügepartner zu einer Hinterschneidung oder einen Kragen 8 umgeformt.
Beim bekannten Durchsetzfügen gemäß Abb. 2, 5 und 6, das nicht unter den Schutzbereich der Erfindung fällt, kommen ebenfalls Stempel und Matrize zur Anwendung, wobei diese hier mit 9 bzw. 10 bezeichnet worden sind. Ohne ein Durchtrennung werden hier in beiden Fügpartner Hinterschneidungen 11, 12 erzeugt.
Das Stanznieten ist dann an der Verbindung von Felge 1 und Schüssel 2 auch noch einmal in der Abbildung 3 gezeigt. Mit 3 ist der Überlappbereich bezeichnet.
In der vorliegenden Beschreibung wurde sowohl der Begriff vorderer oder hinterer bzw. oberer und unterer Fügepartner verwendet. Dies soll zeigen, dass die Fügerichtung sowohl von der Felge zur Schüssel (Abb. 3) wie auch von der Schüssel zur Felge (Abb. 4) erfolgen kann. Gleiches gilt für das aus dem Stand der Technik bekannten Durchsetzfügen oder clinchen, wie es entsprechend in den Abb.5 und 6 vereinfacht dargestellt ist.

## Patentansprüche

1. Verfahren zur Herstellung eines Fahrzeugrads, bestehend aus einer Felge (1) und einer mit dieser im Überlappungsbereich verbundenen Schüssel (2), wobei
die Verbindung zwischen Felge (1) und Schüssel (2) im Überlappungsbereich über den Felgenumfang verteilt durch örtliches mechanisches Kaltumformen des Materials beider Fügepartner erfolgt, wobei durch den Umformvorgang - in Fügerichtung gesehen - hinter dem vorderen Fügepartner eine Hinterschneidung in dem hinteren Fügepartner ausgebildet wird, die den vorderen mit dem hinteren Fügepartner kraft - und formschlüssig verbindet, ohne dass eine Durchtrennung des hinteren Fügepartners im Verformungsbereich erfolgt,
**dadurch gekennzeichnet,**
**dass** die Hinterschneidung durch einen durch den vorderen Fügepartner in den hinteren Fügepartner eingepressten Stanzniet durch Aufspreizen ausgebildet wird.

2. Verfahren nach Anspruch 1,
**dadurch gekennzeichnet,**
**dass** der Niet ein Hohlniet ist.

3. Verfahren nach Anspruch 1,
**dadurch gekennzeichnet,**
**dass** der Niet ein Vollniet ist.

4. Verfahren nach einem der vorstehenden Ansprüche,
**dadurch gekennzeichnet,**
**dass** das Fügen von der Felgenaußenseite aus erfolgt.

5. Verfahren nach einem der vorstehenden Ansprüche,
**dadurch gekennzeichnet,**
**dass** das Fügen von der Schüsselinnenseite aus erfolgt.

6. Verfahren nach einem der vorstehenden Ansprüche,
**dadurch gekennzeichnet,**
**dass** mehrere Fügeverbindungen über den Felgen- bzw. Schüsselumfang verteilt vorgesehen sind.

7. Anwendung des Verfahrens nach den vorstehenden Ansprüchen auf die Herstellung von Fahrzeugrädern, deren Felge und Schüssel aus Stahlblech oder Aluminiumblech, kombiniert aus Stahlblech und Aluminiumblech oder aus beschichteten Werkstoffen mit gleicher oder unterschiedlicher Beschichtung bzw. aus gleichem oder unterschiedlichem Grundwerkstoff bestehen.

## Claims

1. Method of manufacturing a vehicle wheel consisting of a rim (1) and a wheel body (2) which is joined to the latter in the overlap area, the join between the rim (1) and the wheel body (2) being distributed within the overlap area over the periphery of the rim by localised mechanical cold forming of the materials of both parts of the join, wherein as a result of the cold forming process - looking in the direction of the join - an undercut is formed in the rear part of the join behind the front part of the join, the undercut joining the front part of the join to the rear part both non-positively and positively without there being any cutting through of the rear part of the join in the deformation area,
**characterised in that**
the undercut is formed by the opening out of a punch rivet pressed through the front part of the join into the rear part of the join.

2. Method as in claim 1,
**characterised in that**
the rivet is a full tubular rivet.

3. Method as in claim 1,
**characterised in that**
the rivet is a solid rivet.

4. Method as in one of the preceding claims,
**characterised in that**
the joining process is effected from the outside of the rim outwards.

5. Method as in one of the preceding claims,
**characterised in that**
the joining process is effected from the inside of the wheel body outwards.

6. Method as in one of the preceding claims,
**characterised in that**
there are a number of connection joins distributed over the periphery of the rim and/or of the wheel body.

7. Use of the method as in the preceding claims for the manufacture of vehicle wheels whose rims and wheel bodies are made from sheet steel or sheet aluminium, from a combination of sheet steel and sheet aluminium, or from coated materials with the same or different coatings or made from the same or different basic materials.

## Revendications

1. Procédé de fabrication d'une roue de véhicule automobile, comportant une jante (1) et un voile (2) relié à celle-ci dans la zone de recouvrement, la liaison entre jante (1) et voile (2) étant réalisée dans la zone de recouvrement, répartie sur la périphérie de jante, par déformation mécanique à froid locale de la matière des deux parties à assembler, l'opération de déformation créant - vu dans le sens d'assemblage - derrière la partie à assembler avant une contre-dépouille dans la partie à assembler arrière, laquelle relie par adhérence et correspondance de forme la partie à assembler avant à la partie à assembler arrière sans que la partie à assembler arrière soit transpercée dans la zone de déformation,
**caractérisé en ce que** la contre-dépouille est réalisée par écartement d'un rivet auto-poinçonneur enfoncé à travers la partie à assembler avant dans la partie à assembler arrière.

2. Procédé selon la revendication 1,
**caractérisé en ce que** le rivet est un rivet creux.

3. Procédé selon la revendication 1,
**caractérisé en ce que** le rivet est un rivet plein.

4. Procédé selon l'une des revendications précédentes,
**caractérisé en ce que** la liaison est réalisée depuis la face extérieure de jante.

5. Procédé selon l'une des revendications précédentes,
**caractérisé en ce que** la liaison est réalisée depuis la face intérieure de voile.

6. Procédé selon l'une des revendications précédentes,
**caractérisé en ce que** plusieurs liaisons d'assemblage sont prévues réparties à la périphérie de jante ou de voile.

7. Application du procédé selon les revendications précédentes à la fabrication de roues de véhicules automobiles dont la jante et le voile sont en tôle d'acier ou en tôle d'aluminium, en tôle d'aluminium et en tôle d'acier combinées ou en matières revêtues d'une même matière ou de matières différentes, en même matière de base ou en matières de base différentes.
